# EUROPEAN PATENT APPLICATION

(11) **EP 4 836 269 A1**
(43) Date of publication of application: **04.11.2026**
(21) Application number: 24919826.8
(22) Date of filing: 28.10.2024
(51) Int. Cl.: H02M 3/156

(54) **POWER SUPPLY CIRCUIT AND ELECTRONIC DEVICE**

(30) Priority: 25.01.2024 CN 202410111295
(71) Applicant: Huawei Technologies Co., Ltd., Shenzhen, Guangdong 518129 (CN)
(72) Inventor: WANG, Jinfeng, Shenzhen, Guangdong 518129 (CN)
(74) Representative: Huawei European IPR
(86) International application number: PCT/CN2024/127772
(87) International publication number: WO 2025/156746

(57) **Abstract**

A power supply circuit and an electronic device, which relate to the field of display technology. The power supply circuit includes a first power supply module (420) and a second power supply module (430). An input terminal of the first power supply module (420) is configured to receive a power supply voltage. An output terminal of the first power supply module (420) is connected to an input terminal of the second power supply module (430), an output terminal of the second power supply module (430) is configured to provide a supply voltage for a display driver module (440), and the display driver module (440) is configured to drive a screen (450) to display an image. When at least two strings of batteries provide a power supply voltage with a wide input voltage range, the first power supply module (420) is added to perform step-down conversion on the power supply voltage, and then the second power supply module (430) steps up and converts the power supply voltage into the supply voltage. The supply voltage causes the display driver module (440) to drive the screen (450) to display an image. The power supply circuit may support low-withstand-voltage power supply, and the power supply voltage is first stepped down and then stepped up, to meet a minimum supply voltage of the display driver module (440), reduce a voltage of the screen (450) under a light-load condition, and increase an output power, thereby improving power supply efficiency under the light-load condition.

## Description

This application claims priority to Chinese Patent Application No. 202410111295.3, filed with the China National Intellectual Property Administration on January 25, 2024 and entitled "POWER SUPPLY CIRCUIT AND ELECTRONIC DEVICE", which is incorporated herein by reference in its entirety.

### TECHNICAL FIELD

This application relates to the field of display technologies, and in particular, to a power supply circuit and an electronic device.

### BACKGROUND

Organic light-emitting diodes (organic light-emitting diode, OLED) have advantages of being self-emissive and requiring neither backlighting nor color filters or liquid crystals, and outperform a conventional liquid crystal display (liquid crystal display, LCD) and light-emitting diode (light-emitting diode, LED) in terms of image quality, response speed, thickness, and viewing angle. Therefore, the organic light-emitting diodes are widely used in recent years.

With the development of display technologies, OLED screens are widely used in mobile phones, digital cameras, notebook computers, televisions, and the like. In an electronic device equipped with an OLED screen, power supply efficiency used to drive the OLED screen varies with changes of a load level of the electronic device, thereby affecting a battery life of the electronic device.

### SUMMARY

This application provides a power supply circuit and an electronic device, to improve power supply efficiency of a power supply of an OLED display technology when a display is under different loads, and select optimal efficiency of the power supply.

Technical solutions are as follows:
According to a first aspect, an embodiment of this application provides a power supply circuit. The power supply circuit includes a first power supply module and a second power supply module.

An input terminal of the first power supply module is configured to receive a power supply voltage, the power supply voltage is provided by at least two strings of batteries, an output terminal of the first power supply module is connected to an input terminal of the second power supply module, an output terminal of the second power supply module is configured to provide a supply voltage for a display driver module, and the display driver module is configured to drive a screen to display an image.

The first power supply module is configured to step down and convert the power supply voltage into a regulated voltage, the second power supply module is configured to step up and convert the regulated voltage into the supply voltage, and the supply voltage is used to cause the display driver module to drive an OLED display.

In this application, when the at least two strings of batteries provide a power supply voltage with a wide input voltage range, the first power supply module is added before the second power supply module to perform step-down conversion on the power supply voltage to convert the power supply voltage into a regulated voltage, and then the second power supply module performs step-up conversion on the regulated voltage to convert the regulated voltage into the supply voltage. The supply voltage is transmitted to the display driver module, so that the display driver module can drive the screen. Because the first power supply module performs step-down conversion on the power supply voltage, the power supply circuit may support low-withstand-voltage power supply, and the power supply voltage is first stepped down by the first power supply module and then stepped up by the second power supply module, to meet a minimum supply voltage of the display driver module, reduce a voltage when the screen is under a light-load condition, and increase an output power, thereby improving power supply efficiency under the light-load condition.

In a possible implementation of this application, the first power supply module includes a synchronous step-down regulator module and/or a switched capacitor converter module. The synchronous step-down regulator module is configured to convert the power supply voltage into a first regulated voltage, and the switched capacitor converter module is configured to convert the power supply voltage into a second regulated voltage.

In an example, the first power supply module includes the synchronous step-down regulator module to supply power to a low-withstand-voltage OLED power supply solution. By using a two-stage power supply design an input withstand voltage problem of a low-withstand-voltage OLED backlight power supply module is resolved, and power supply efficiency is improved under a light-load condition.

In an example, the first power supply module includes the switched capacitor converter module to supply power to the low-withstand-voltage OLED power supply solution. By using the two-stage power supply design, the input withstand voltage problem of the low-withstand-voltage OLED backlight power supply module is resolved, and the power supply efficiency is improved under a light-load condition and a partial heavy-load condition.

In a possible implementation of this application, when the first power supply module includes the synchronous step-down regulator module and the switched capacitor converter module, the first power supply module further includes a detection module and a power path management module. An input terminal of the synchronous step-down regulator module and an input terminal of the switched capacitor converter module are configured to receive the power supply voltage, an output terminal of the synchronous step-down regulator module is connected to a first input terminal of the power path management module, an output terminal of the switched capacitor converter module is connected to a second input terminal of the power path management module, and an output terminal of the power path management module is connected to the input terminal of the second power supply module. An output terminal of the detection module is connected to a third input terminal of the power path management module, and the detection module is configured to control the power path management module to output a first regulated voltage output by the synchronous step-down regulator module or a second regulated voltage output by the switched capacitor converter module.

In a possible implementation of this application, the detection module is configured to detect power supply efficiency sets under different loads, the power supply efficiency sets include a power supply efficiency set of a first path and a power supply efficiency set of a second path, the first path is a path in which the synchronous step-down regulator module is located, and the second path is a path in which the switched capacitor converter module is located. The detection module is configured to detect load information and the power supply voltage, and control, based on the load information, the power supply voltage, and the power supply efficiency sets, the power path management module to output the first regulated voltage or the second regulated voltage.

In this embodiment of this application, a power supply efficiency set, for example, a power supply efficiency table or a power supply efficiency curve, is obtained by detecting power supply efficiency of different paths under different loads. Then, load information and power supply voltages of different paths are measured and are compared with the power supply efficiency set, to select a high-efficiency path.

In a possible implementation of this application, the detection module is configured to detect power supply efficiency of the first path and power supply efficiency of the second path. When the power supply efficiency of the first path is greater than the power supply efficiency of the second path, the power path management module outputs the first regulated voltage. When the power supply efficiency of the second path is greater than the power supply efficiency of the first path, the power path management module outputs the second regulated voltage. When the power supply efficiency of the second path is equal to the power supply efficiency of the first path, the power path management module outputs the first regulated voltage or the second regulated voltage. By directly detecting and directly comparing power supply efficiency of different paths, a power supply path with optimal efficiency may be selected.

In a possible implementation of this application, a first terminal of a first diode is connected to the output terminal of the synchronous step-down regulator module, and a second terminal of the first diode is connected to the second power supply module. A first terminal of a second diode is connected to the output terminal of the switched capacitor converter module, and a second terminal of the second diode is connected to the second power supply module. In an example, the first diode and the second diode may be ideal diodes.

In a possible implementation of this application, the power supply circuit further includes a main chip. The main chip is connected to the display driver module, the main chip is configured to send image information to the display driver module. The image information is used to display an image on an OLED screen.

In a possible implementation of this application, the second power supply module includes a synchronous step-up regulator and a synchronous inverting step-up controller. An input terminal of the synchronous step-up regulator is connected to the output terminal of the power path management module, an output terminal of the synchronous step-up regulator is configured to send a supply voltage to the display driver module, and the synchronous inverting step-up controller is configured to receive a feedback voltage sent by the display driver module.

According to a second aspect, an embodiment of this application provides a power supply device. The power supply device includes the power supply circuit according to any one of the first aspect and the implementations of the first aspect.

According to a third aspect, an embodiment of this application provides a display apparatus. The display apparatus includes an OLED display and the power supply device according to the second aspect.

According to a fourth aspect, an embodiment of this application provides an electronic device. The electronic device includes a battery module, a display module, and the power supply circuit according to any one of the first aspect and the implementations of the first aspect. The battery module is configured to provide a power supply voltage for the power supply circuit, and the display module is configured to display an image.

In a possible implementation of this application, the display module includes a display driver module and a display. The display driver module is configured to drive the display to display an image. For example, the display may be an OLED display.

Any apparatus, computer storage medium, computer program product, chip, or communication system provided above is configured to execute the corresponding method provided above. Therefore, for beneficial effects that can be achieved, refer to the beneficial effects of the corresponding solution in the corresponding method provided above. Details are not described herein again.

### BRIEF DESCRIPTION OF DRAWINGS

FIG. 1 is a diagram of a power supply circuit of a notebook computer with an OLED screen according to this application;
FIG. 2 is a diagram of a power supply circuit with a wide input voltage range according to this application;
FIG. 3 is a diagram of a power supply circuit with a narrow input voltage range according to an embodiment of this application;
FIG. 4 is a diagram of a structure of a power supply circuit according to an embodiment of this application;
FIG. 5 is a diagram of a structure of a power supply circuit with a synchronous step-down regulator module according to an embodiment of this application;
FIG. 6 is a comparison diagram of power supply efficiency curves according to an embodiment of this application;
FIG. 7 is a diagram of a structure of a power supply circuit with a switched capacitor converter module according to an embodiment of this application;
FIG. 8 is another comparison diagram of power supply efficiency curves according to an embodiment of this application;
FIG. 9 is a diagram of a structure of another power supply circuit according to an embodiment of this application;
FIG. 10 is a line graph of power supply efficiency according to an embodiment of this application; and
FIG. 11 is a diagram of a structure of a power supply circuit according to an embodiment of this application.

### DESCRIPTION OF EMBODIMENTS

To clearly describe technical solutions in embodiments of this application, terms such as "first" and "second" are used in embodiments of this application to distinguish between same items or similar items that provide basically same functions and purposes. For example, a first power supply module and a second power supply module are merely used to distinguish between different power supply modules, and a sequence of the first power supply module and the second power supply module is not limited. A person skilled in the art may understand that the terms such as "first" and "second" do not limit a quantity or an execution sequence, and the terms such as "first" and "second" do not indicate a definite difference.

It should be noted that in this application, terms such as "example" or "for example" are used to represent giving examples, illustrations, or descriptions. Any embodiment or design scheme described as "example" or "for example" in this application should not be explained as being more preferred or more advantageous than another embodiment or design scheme. Exactly, use of the terms such as "example" or "for example" is intended to present a related concept in a specific manner.

In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

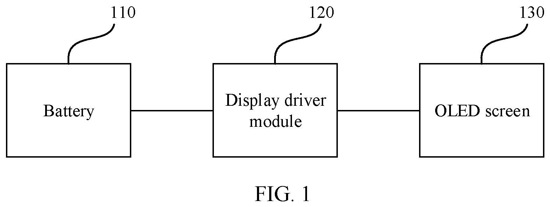

Currently, an organic light-emitting diode (organic light-emitting diode, OLED) technology is widely applied in the field of displays, for example, electronic devices such as notebook computers, televisions, and mobile phones. A notebook computer is used as an example. As shown in FIG. 1, FIG. 1 is a diagram of a power supply circuit of a notebook computer with an OLED screen. The power supply circuit includes a battery 110 and a display driver module 120. The battery 110 is configured to provide a driving voltage for the display driver module 120, and the display driver module 120 may drive the OLED screen 130 to display an image. However, power supply efficiency of the power supply circuit is affected by a load level of the OLED screen, that is, when the OLED screen is under a light-load condition (low brightness), the power supply efficiency is reduced. For example, an input power of a power supply remains constant. When the notebook computer is playing a video, the OLED screen is under a light-load condition, and an output voltage remains constant, but a current decreases, which causes an output power to decrease, thereby reducing the power supply efficiency. This imposes a great impact on a battery life of the notebook computer.

To resolve a power supply efficiency problem of a power supply circuit, two solutions, namely, a wide input voltage range and a narrow input voltage range, are mainly used in the conventional technology. The following describes the two power supply solutions.

### Solution 1: Wide input voltage range

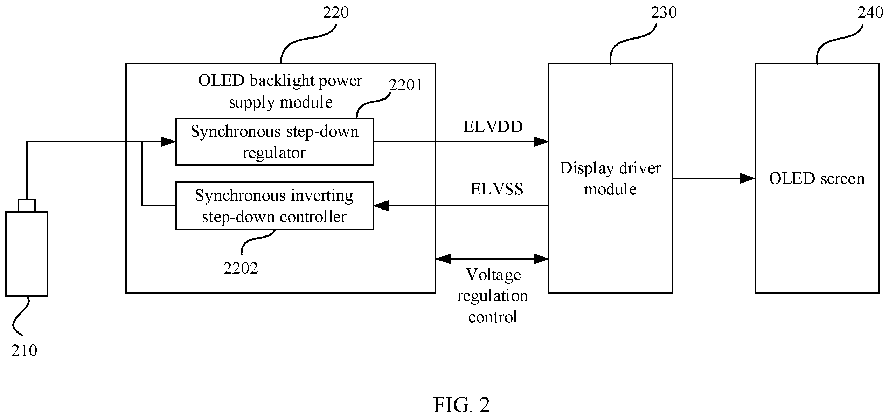

FIG. 2 is a diagram of a power supply circuit with a wide input voltage range according to an embodiment of this application. The power supply circuit includes a battery 210, a high-withstand-voltage OLED backlight power supply module 220, a display driver module 230, and an OLED screen 240. The battery 210 includes two or at least two strings of battery cells. The battery 210 is configured to provide a supply voltage for the high-withstand-voltage OLED backlight power supply module 220. The high-withstand-voltage OLED backlight power supply module 220 is configured to convert the supply voltage into a driving voltage. The driving voltage is used to drive the display driver module 230, and the display driver module 230 is configured to drive the OLED screen 240 to display an image.

The high-withstand-voltage OLED backlight power supply module 220 includes a synchronous step-down regulator 2201 and a synchronous inverting step-down controller 2202. An input terminal of the synchronous step-down regulator 2201 is connected to the battery 210, and is configured to receive the supply voltage. An output terminal of the synchronous step-down regulator 2201 is connected to the display driver module 230, and is configured to output the driving voltage. The synchronous inverting step-down controller 2202 is connected between the synchronous step-down regulator 2201 and the display driver module 230, and is configured to perform voltage regulation control.

The wide input voltage range solution is mainly applied to large-sized OLED products, for example, televisions and notebook computers. However, because the battery 210 includes at least two strings of battery cells, the battery 210 has a relatively high input voltage. In this case, when a load level of an OLED product is relatively high (a current is relatively large), because both a voltage and the current are relatively large, an output power of a power supply is relatively high, that is, power supply efficiency is relatively high. However, when the load level is relatively low (the current is relatively small), because the voltage is relatively large and the current is relatively small, the output power of the power supply is relatively low, that is, the power supply efficiency is relatively low.

### Solution 2: Narrow input voltage range

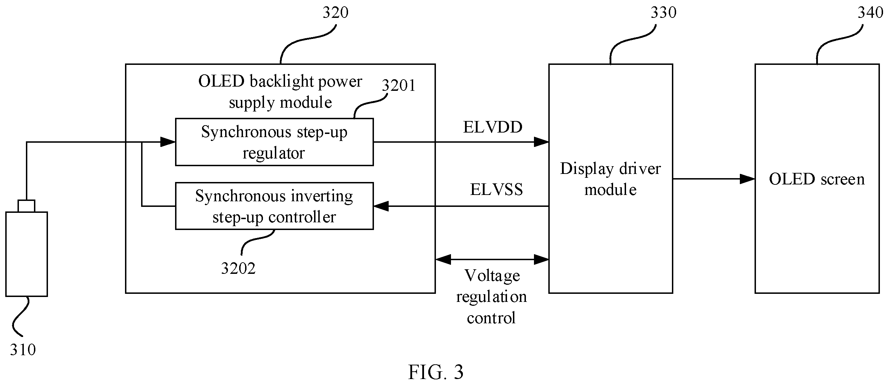

FIG. 3 is a diagram of a power supply circuit with a narrow input voltage range according to an embodiment of this application. The power supply circuit includes a battery 310, a low-withstand-voltage OLED backlight power supply module 320, a display driver module 330, and an OLED screen 340. The battery 310 includes one string of battery cells. The battery 310 is configured to provide a supply voltage for the low-withstand-voltage OLED backlight power supply module 320. The low-withstand-voltage OLED backlight power supply module 320 is configured to convert the supply voltage into a driving voltage. The driving voltage is used to drive the display driver module 330, and the display driver module 330 is configured to drive the OLED screen 340 to display an image.

The low-withstand-voltage OLED backlight power supply module 320 includes a synchronous step-up regulator 3201 and a synchronous inverting step-up and step-down controller 3202. An input terminal of the synchronous step-up regulator 3201 is connected to the battery 310, and is configured to receive the supply voltage. An output terminal of the synchronous step-up regulator 3201 is connected to the display driver module 330, and is configured to output the driving voltage. The synchronous inverting step-up and step-down controller 3202 is connected between the synchronous step-up regulator 3201 and the display driver module 330, and is configured to perform voltage regulation control.

The narrow input voltage range solution is mainly applied to small and medium-sized OLED products, for example, mobile phones and tablets. Because the low-withstand-voltage OLED backlight power supply module 320 steps up and regulates the supply voltage, efficiency of a power supply circuit of an OLED product remains relatively high regardless of whether a load level of the OLED product is high or low. However, the low-withstand-voltage OLED backlight power supply module 320 cannot be directly connected to a plurality of strings of battery cells, but can only be connected to one string of electrochemical cells. As a result, this solution is insufficient in voltage withstanding. In addition, when a power supply input voltage is relatively low due to a relatively low battery level or a relatively large load variation of another module of the OLED product, power supply efficiency is also reduced.

It can be learned from the foregoing that currently, the power supply circuit of the OLED product has a problem of unstable power supply efficiency. When the load level is low or high, the power supply efficiency may be low, and the power supply circuit cannot select optimal efficiency to supply power.

To resolve the foregoing problem, this application provides a power supply circuit and an electronic device, to improve power supply efficiency at different load levels by using a two-stage power supply solution, and determine and select an optimal power supply method based on one or more statuses by detecting system or component statuses.

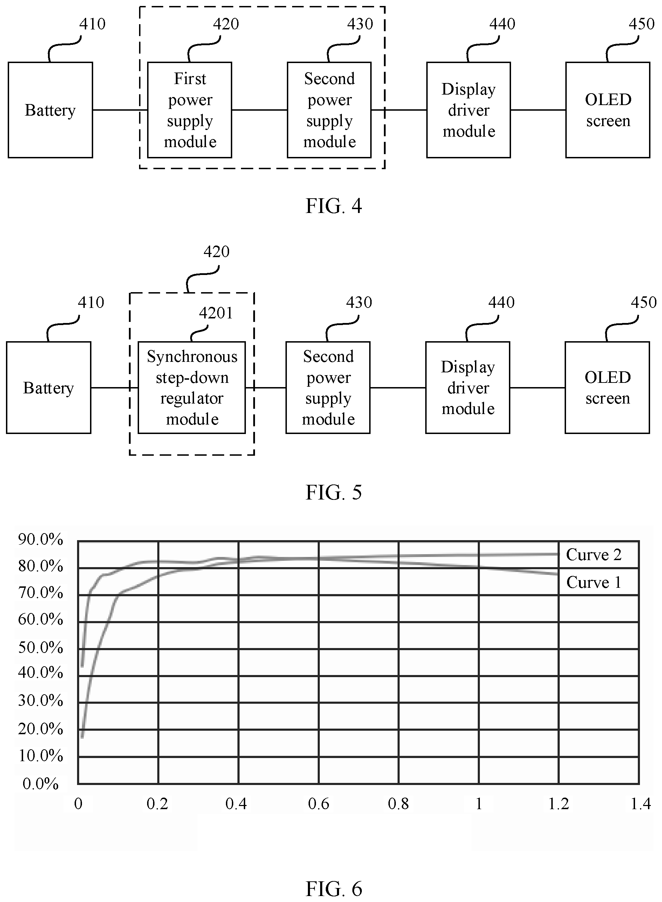

The following uses an example in which the OLED product is a notebook computer, to describe an OLED power supply circuit of the notebook computer. As shown in FIG. 4, FIG. 4 is a diagram of a structure of a power supply circuit according to an embodiment of this application. The power supply circuit includes a first power supply module 420 and a second power supply module 430. An input terminal of the first power supply module 420 is configured to receive a power supply voltage. The power supply voltage is provided by at least two strings of batteries. An output terminal of the first power supply module 420 is connected to an input terminal of the second power supply module 430, an output terminal of the second power supply module 430 is configured to provide a supply voltage for a display driver module 440, and the display driver module is configured to drive a screen 450 to display an image.

The first power supply module 420 is configured to step down and convert the power supply voltage into a regulated voltage, the second power supply module 430 is configured to step up and convert the regulated voltage into the supply voltage, and the supply voltage is used to drive the display driver module 440.

In a possible implementation, the first power supply module 420 and the second power supply module 430 are integrated on a printed circuit board, or may be integrated on a flexible circuit board or another circuit board. This is not limited in this embodiment of this application.

In a possible embodiment, the power supply voltage is provided by a battery module 410. As shown in FIG. 4, an output terminal of the battery module 410 is connected to the input terminal of the first power supply module 420. The output terminal of the second power supply module 430 is connected to the display driver module 440.

The battery module 410 includes at least two strings of batteries, is configured to provide a power supply voltage with a wide input voltage range, and may also provide power supply voltages of a plurality of levels, for example, 12.9 V, 11.4 V, and 9.9 V.

The first power supply module 420 may convert the power supply voltage into a regulated voltage. The first power supply module 420 steps down the power supply voltage, and stabilizes the power supply voltage within a preset range.

In an example, as shown in FIG. 5, the first power supply module 420 is a synchronous step-down regulator module 4201, the output terminal of the battery module 410 is connected to an input terminal of the synchronous step-down regulator module 4201, and an output terminal of the synchronous step-down regulator module 4201 is connected to the second power supply module 430. The synchronous step-down regulator module 4201 is configured to convert the power supply voltage into a first regulated voltage. In this case, the synchronous step-down regulator module 4201 serves as a direct-current synchronous step-down regulator power supply to provide a voltage for the second power supply module 430.

For example, the battery module 410 may provide three levels of power supply voltages, and voltage values are 12.9 V, 11.4 V, and 9.9 V respectively. The synchronous step-down regulator module 4201 converts the power supply voltage into the first regulated voltage based on any one of the three voltage values, and a voltage value of the first regulated voltage is 4.3 V. FIG. 6 is a comparison diagram of power supply efficiency curves. A horizontal axis represents a current, and a vertical axis represents power supply efficiency. A curve 1 is a change curve of power supply efficiency after the synchronous step-down regulator module 4201 is added, and a curve 2 is a power supply efficiency curve of the foregoing solution 1. It can be learned from the figure that when the current is relatively low, that is, under a light-load condition, the power supply efficiency is significantly improved.

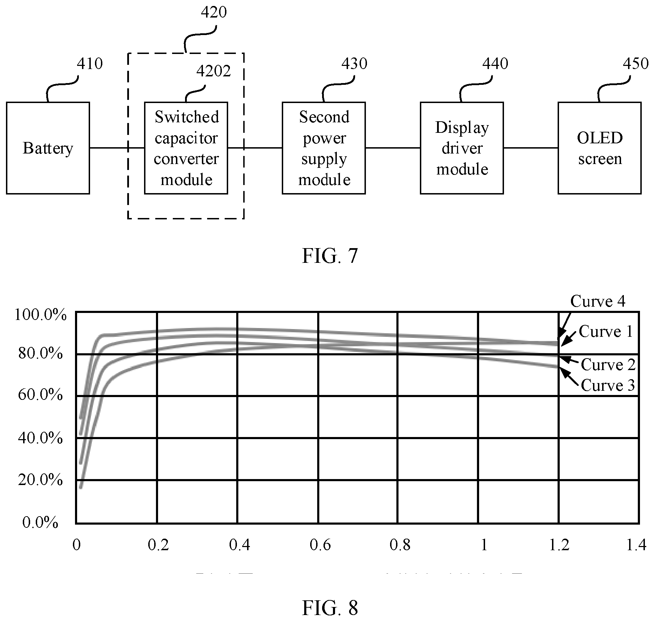

In another example, as shown in FIG. 7, the first power supply module 420 is a switched capacitor converter module 4202, the output terminal of the battery module 410 is connected to an input terminal of the switched capacitor converter module 4202, and an output terminal of the switched capacitor converter module 4202 is connected to the second power supply module 430. The switched capacitor converter module 4202 is configured to convert the power supply voltage into a second regulated voltage. In this case, the switched capacitor converter module 4202 serves as a direct-current switched capacitor converter power supply to provide a voltage for the second power supply module 430.

For example, the battery module 410 may provide three levels of power supply voltages, and voltage values are 12.9 V, 11.4 V, and 9.9 V respectively. A voltage conversion ratio of the switched capacitor converter module 4202 is 3:1. Voltage values of the second regulated voltage converted from the power supply voltage correspond to three levels: 4.3 V, 3.8 V, and 3.3 V. FIG. 8 is a comparison diagram of power supply efficiency curves. Curves 1 to 3 are change curves of power supply efficiency after the switched capacitor converter module 4202 is added, and are respectively a high battery level of the battery module (curve 1), a medium battery level of the battery module (curve 2), and a low battery level of the battery module (curve 3). A curve 4 is the power supply efficiency curve of the foregoing solution 1. It can be learned from the figure that when the current is relatively low, that is, under a light-load condition, the power supply efficiency is significantly improved, and when under a partial heavy-load condition, the power supply efficiency is also improved.

The supply voltage is a voltage that is obtained by stepping up the regulated voltage generated by the first power supply module 420 and is stabilized within the preset range. For example, the first power supply module 420 is the synchronous step-down regulator module 4201. The synchronous step-down regulator module 4201 converts the power supply voltage into the first regulated voltage, and a voltage value of the first regulated voltage is 4.3 V. The second power supply module 430 converts the first regulated voltage into the supply voltage, and a voltage value of the supply voltage is 7 V.

In an example, the second power supply module 430 is a synchronous step-up regulator, the output terminal of the first power supply module 420 is connected to an input terminal of the synchronous step-up regulator, and an output terminal of the synchronous step-up regulator is connected to the display driver module 440.

In this application, when the battery module 410 provides a power supply voltage with a wide input voltage range, the first power supply module 420 is added before the second power supply module 430 to perform step-down conversion on the power supply voltage to convert the power supply voltage into a regulated voltage, and then the second power supply module 430 performs step-up conversion on the regulated voltage to convert the regulated voltage into the supply voltage. The supply voltage is transmitted to the display driver module 440, so that the display driver module 440 can drive an OLED screen. Because the first power supply module 420 performs step-down conversion on the power supply voltage, the power supply circuit may support low-withstand-voltage power supply, and the power supply voltage is first stepped down by the first power supply module 420 and then stepped up by the second power supply module 430, to meet a minimum supply voltage of the display driver module, reduce a voltage when the OLED is under a light-load condition, and increase an output power, thereby improving power supply efficiency when the OLED screen is under the light-load condition.

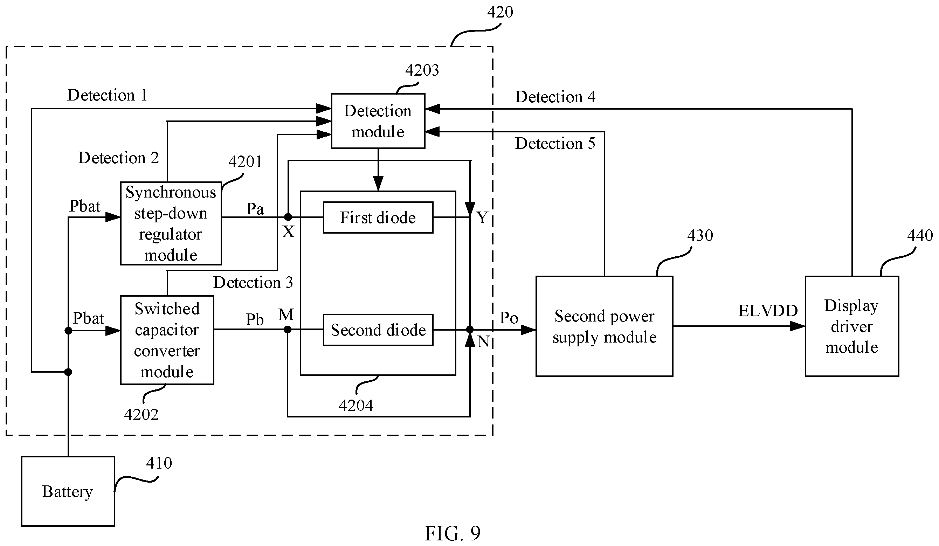

As shown in FIG. 9, FIG. 9 is a diagram of a structure of a power supply circuit according to an embodiment of this application. When a first power supply module 420 includes a synchronous step-down regulator module 4201 and a switched capacitor converter module 4202, the first power supply module 420 further includes a detection module 4203 and a power path management module 4204.

An input terminal of the synchronous step-down regulator module 4201 and an input terminal of the switched capacitor converter module 4202 are configured to receive a power supply voltage. An output terminal of the synchronous step-down regulator module 4201 is connected to a first input terminal of the power path management module 4204, an output terminal of the switched capacitor converter module 4202 is connected to a second input terminal of the power path management module 4204, and an output terminal of the power path management module 4204 is connected to an input terminal of a second power supply module 430.

In an example, as shown in FIG. 9, an output terminal of a battery module 410 is connected to the input terminal of the synchronous step-down regulator module 4201 and the input terminal of the switched capacitor converter module 4202.

An output terminal of the detection module 4203 is connected to a third input terminal of the power path management module 4204, and the detection module 4203 is configured to control the power path management module 4204 to output a first regulated voltage output by the synchronous step-down regulator module 4201 or a second regulated voltage output by the switched capacitor converter module 4202.

The first power supply module 420 may include only the synchronous step-down regulator module 4201, or may include only the switched capacitor converter module 4202, or may include the synchronous step-down regulator module 4201 and the switched capacitor converter module 4202. When the first power supply module 420 includes the synchronous step-down regulator module 4201 and the switched capacitor converter module 4202, the synchronous step-down regulator module 4201 outputs the first regulated voltage, and the switched capacitor converter module 4202 outputs the second regulated voltage.

In a possible embodiment of this application, the detection module 4203 is configured to detect power supply efficiency sets under different loads, and the power supply efficiency sets include a power supply efficiency set of a first path and a power supply efficiency set of a second path. The first path is a path in which the synchronous step-down regulator module 4201 is located, and the second path is a path in which the switched capacitor converter module 4202 is located.

The power supply efficiency sets include a plurality of power supply efficiencies corresponding to the synchronous step-down regulator module 4201 under different loads, and a plurality of power supply efficiencies corresponding to the switched capacitor converter module 4202 under different loads.

The detection module 4203 may detect an input/output voltage and an input/output current and obtain the power supply efficiency through computation based on the input/output voltage and the input/output current, or may detect input/output efficiency to obtain the power supply efficiency, or may compute an input/output power by detecting an external resistor and obtain the power supply efficiency based on the input/output power.

It may be understood that each load corresponds to one power supply efficiency, and a plurality of power supply efficiencies corresponding to a plurality of loads form a power supply efficiency set, for example, a power supply efficiency curve.

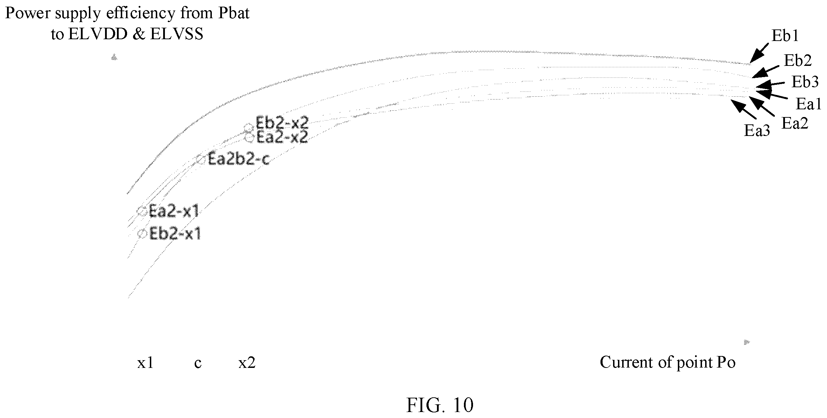

For example, the power supply voltage Pbat provided by the battery module 410 includes three levels: 12.9 V, 11.4 V, and 9.9 V. The first regulated voltage Pa output by the synchronous step-down regulator module 4201 is 4.3 V, and the second regulated voltage Pb output by the switched capacitor converter module 4202 is 4.3 V, 3.8 V, or 3.3 V. A power supply efficiency line graph shown in FIG. 10 includes six curves. A curve Ea1 is an efficiency curve when the power supply voltage Pbat is 12.9 V; a curve Ea2 is an efficiency curve when the power supply voltage Pbat is 11.4 V; a curve Ea3 is an efficiency curve when the power supply voltage Pbat is 9.9 V; a curve Eb1 is an efficiency curve when the power supply voltage Pbat is 12.9 V; a curve Eb2 is an efficiency curve when the power supply voltage Pbat is 11.4 V; and a curve Eb3 is an efficiency curve when the power supply voltage Pbat is 9.9 V.

A path may be understood as a path through which the battery module 410 provides electric energy for a display driver module 440.

For example, as shown in FIG. 9, the battery module 410 provides the power supply voltage Pbat, the synchronous step-down regulator module 4201 outputs the first regulated voltage Pa, the switched capacitor converter module 4202 outputs the second regulated voltage Pb, the power path management module 4204 outputs an output voltage Po, and the second power supply module 430 outputs a supply voltage ELVDD. In this case, the first path includes the power supply voltage Pbat, the first regulated voltage Pa, the output voltage Po, and the supply voltage ELVDD, and the second path includes the power supply voltage Pbat, the second regulated voltage Pb, the output voltage Po, and the power supply voltage ELVDD.

Optionally, the first regulated voltage output by the synchronous step-down regulator module 4201 may alternatively not pass through the power path management module 4204, and may be directly transmitted to the second power supply module 430 through, for example, a path in FIG. 9 from an X point at an output terminal of the synchronous step-down regulator module 4201 to a point Y bypassing the power path management module 4204. Similarly, the second regulated voltage output by the switched capacitor converter module 4202 may alternatively not pass through the power path management module 4204, and may be directly transmitted to the second power supply module 430 through, for example, a path in FIG. 9 from an M point at an output terminal of the switched capacitor converter module 4202 to a point N bypassing the power path management module 4204.

Optionally, the detection module 4203 is further configured to store the power supply efficiency sets under different loads. The power supply efficiency sets under different loads may be stored in the detection module 4203 in a form of a table, or may be stored in the detection module 4203 in a form of a line graph, or may be stored in another form. This is not limited in this embodiment of this application.

The detection module 4203 is configured to detect load information and the power supply voltage, and control, based on the load information, the power supply voltage, and the power supply efficiency sets, the power path management module 4204 to output the first regulated voltage or the second regulated voltage.

The detection module 4203 may be a micro-controller unit (micro-controller unit, MCU). For example, the MCU may be configured to store a power supply efficiency line graph and a power supply efficiency table.

The load information is a load point (for example, a current), and power supply efficiency corresponding to the load point may be obtained by using both the load point and the power supply efficiency set. The load information may be obtained by detecting the second power supply module 430 by the detection module 4203 or obtained by detecting the display driver module 440.

In a possible implementation of this application, the detection module 4203 stores a power supply efficiency curve, and the detection module 4203 is connected to each of the battery module 410, the synchronous step-down regulator module 4201, the switched capacitor converter module 4202, the second power supply module 430, and the display driver module 440. Refer to FIG. 9. That the detection module 4203 controls the power path management module 4204 to output the first regulated voltage or the second regulated voltage includes the following steps:

Step S101: The detection module 4203 obtains the load information.

In an example, the detection module 4203 reads brightness information of an OLED screen from the display driver module 440 through detection 4, and obtains a power supply load point x1 through computation based on the brightness information.

The detection module 4203 may alternatively obtain the brightness information of the OLED screen from another module. This is not limited in this embodiment of this application.

In another example, the detection module 4203 obtains the power supply load point x1 from the second power supply module 430 through detection 5.

Step S102: The detection module 4203 detects the first regulated voltage and the second regulated voltage.

The first regulated voltage and the second regulated voltage may be obtained by detecting the power supply voltage Pbat, or may be directly obtained.

In an example, the detection module 4203 obtains the power supply voltage Pbat through detection 1, and then obtains the first regulated voltage and the second regulated voltage through computation based on the power supply voltage Pbat.

For example, if the power supply voltage Pbat obtained by the detection module 4203 through detection 1 is 12.9 V, it may be determined that the first regulated voltage Pa is 4.3 V and the second regulated voltage Pb is 4.3 V; if the power supply voltage Pbat obtained by the detection module 4203 through detection 1 is 11.4 V, it may be determined that the first regulated voltage Pa is 4.3 V and the second regulated voltage Pb is 3.8 V; or if the power supply voltage Pbat obtained by the detection module 4203 through detection 1 is 9.9 V, it may be determined that the first regulated voltage Pa is 4.3 V and the second regulated voltage Pb is 3.3 V.

In another example, the detection module 4203 obtains the first regulated voltage from the synchronous step-down regulator module 4201 through detection 2, and obtains the second regulated voltage from the switched capacitor converter module 4202 through detection 3.

Step S103: The detection module 4203 determines a first efficiency point based on the first regulated voltage Pa and the power supply efficiency curve, and determines a second efficiency point based on the second regulated voltage Pb and the power supply efficiency curve.

For example, the load information obtained by the detection module 4023 is the load point x1. The first regulated voltage Pa detected by the detection module 4023 is obtained by stepping down the power supply voltage Pbat from 11.4 V to 4.3 V. With reference to the power supply efficiency curves shown in FIG. 10 (for a meaning of each curve in FIG. 10, refer to the foregoing embodiment), it may be determined that the curve Ea2 is a corresponding power supply efficiency curve, and a first efficiency point Ea2-x1 may be determined based on the load point x1. The second regulated voltage Pb detected by the detection module 4023 is 3.8 V. With reference to the power supply efficiency curves shown in FIG. 10, it may be determined that the curve Eb2 is a corresponding power supply efficiency curve, and a second efficiency point Eb2-x1 may be determined based on the load point x1.

For example, the load information obtained by the detection module 4023 is a power supply load point x2, which is the same as that in the foregoing embodiment. With reference to the power supply efficiency curves shown in FIG. 8, a first efficiency point Ea2-x2 and a second efficiency point Eb2-x2 may be determined.

Step S104: The detection module 4203 compares values of the first efficiency point and the second efficiency point, and controls, based on the values of the first efficiency point and the second efficiency point, the regulated voltage output by the power path management module 4204.

When the first efficiency point is greater than the second efficiency point, the detection module 4203 controls the power path management module 4204 to output the first regulated voltage. When the first efficiency point is less than the second efficiency point, the detection module 4203 controls the power path management module 4204 to output the second regulated voltage. When the first efficiency point is equal to the second efficiency point, the detection module 4203 controls the power path management module 4204 to output the first regulated voltage or the second regulated voltage.

For example, according to the foregoing step S103, it can be learned from FIG. 10 that when the load information is the load point x1, the first efficiency point Ea2-x1 is greater than the second efficiency point Eb2-x1. In this case, the detection module 4203 controls the power path management module 4204 to output the first regulated voltage Pa.

For example, according to the foregoing step S103, it can be learned from FIG. 10 that when the load information is the load point x2, the first efficiency point Ea2-x2 is less than the second efficiency point Eb2-x2. In this case, the detection module 4203 controls the power path management module 4204 to output the second regulated voltage Pb.

It should be noted that the first efficiency point and the second efficiency point may be the same. When the first efficiency point is the same as the second efficiency point, the detection module 4203 may control the power path management module 4204 to output the first regulated voltage Pa, or output the second regulated voltage Pb. For example, refer to FIG. 10. When the load information is a load point c, it can be learned that the two curves intersect, which indicates that the first efficiency point is equal to the second efficiency point, and is denoted as Ea2b2-c.

In a possible embodiment of this application, the detection module 4203 is configured to detect power supply efficiency of the first path and power supply efficiency of the second path. When the power supply efficiency of the first path is greater than the power supply efficiency of the second path, the power path management module 4204 outputs the first regulated voltage. When the power supply efficiency of the second path is greater than the power supply efficiency of the first path, the power path management module 4204 outputs the second regulated voltage. When the power supply efficiency of the second path is equal to the power supply efficiency of the first path, the power path management module 4204 outputs the first regulated voltage or the second regulated voltage.

In an example, the power supply efficiency of the first path is power supply efficiency of a path in which the synchronous step-down regulator module 4201 is located, and is determined based on efficiency of the synchronous step-down regulator module 4201 and efficiency of the second power supply module 430. The power supply efficiency of the second path is power supply efficiency of the switched capacitor converter module 4202, and is determined by efficiency of the switched capacitor converter module 4202 and the efficiency of the second power supply module 430.

The efficiency of the synchronous step-down regulator module 4201 may be obtained by directly detecting the synchronous step-down regulator module 4201 by the detection module 4203, the efficiency of the switched capacitor converter module 4202 may be obtained by directly detecting the switched capacitor converter module 4202 by the detection module 4203, and the efficiency of the second power supply module 430 may be obtained by directly detecting the second power supply module 430.

In a possible implementation of this application, refer to FIG. 9. The detection module 4203 controls the power path management module 4204 to output the first regulated voltage or the second regulated voltage. A difference between this embodiment and step S101 to step S104 described in the foregoing embodiment lies in that the detection module 4203 obtains power supply efficiency by detecting input/output efficiency, including the following specific steps.

Step S201: The detection module 4203 obtains the efficiency of the synchronous step-down regulator module 4201 and the efficiency of the second power supply module 430.

For example, the detection module 4203 obtains efficiency E1 from the synchronous step-down regulator module 4201 through detection 2. The detection module 4203 obtains efficiency E1' from the second power supply module 430 through detection 5.

Step S202: The detection module 4203 obtains the efficiency of the switched capacitor converter module 4202 and the efficiency of the second power supply module 430.

For example, the detection module 4203 obtains efficiency E2 from the switched capacitor converter module 4202 through detection 3. The detection module 4203 obtains efficiency E2' from the second power supply module 430 through detection 5.

Step S203: The detection module 4203 determines first power supply efficiency based on the efficiency of the synchronous step-down regulator module 4201 and the efficiency of the second power supply module 430, and determines second power supply efficiency based on the efficiency of the switched capacitor converter module 4202 and the efficiency of the second power supply module 430.

The power supply efficiency may be a product of efficiencies. For example, the first power supply efficiency is a product of the efficiency of the synchronous step-down regulator module 4201 and the efficiency of the second power supply module 430, or may be another relationship. This is not limited in this embodiment of this application.

For example, the detection module 4203 determines, based on the efficiency E1 of the synchronous step-down regulator module 4201 and the efficiency E1' of the second power supply module 430, that the first power efficiency is E1*E1', and determines, based on the efficiency E2 of the switched capacitor converter module 4202 and the efficiency E2' of the second power supply module 430, that the second power efficiency is E2*E2'.

Step S204: The detection module 4203 compares values of the first power supply efficiency and the second power supply efficiency, and controls, based on the values of the first power supply efficiency and the second power supply efficiency, the regulated voltage output by the power path management module 4204.

When the first power supply efficiency is greater than the second power supply efficiency, the detection module 4203 controls the first regulated voltage output by the power path management module 4204. When the first power supply efficiency is less than the second power supply efficiency, the detection module 4203 controls the second regulated voltage output by the power path management module 4204. When the first power supply efficiency is equal to the second power supply efficiency, the detection module 4203 controls the first regulated voltage or the second regulated voltage output by the power path management module 4204.

In another example, power supply efficiency of the synchronous step-down regulator module 4201 is determined by an input power of the synchronous step-down regulator module 4201 and an output power of the second power supply module 430. The power supply efficiency of the switched capacitor converter module 4202 is determined by an input power of the switched capacitor converter module 4202 and the output power of the second power supply module 430.

The input power and the output power may be measured by using a formula P=U*I.

For example, the series resistor R is added to a power supply input terminal of the synchronous step-down regulator module 4021, a voltage of the input terminal is Va, and a voltage of an output terminal is Vb. In this case, the input power of the synchronous step-down regulator module 4021 is Pin=Va*(Va-Vb)/R. The input power of the switched capacitor converter module 4202 and the output power of the second power supply module 430 are obtained in a similar way, and details are not described herein again.

In a possible implementation of this application, refer to FIG. 9. The detection module 4203 controls the power path management module 4204 to output the first regulated voltage or the second regulated voltage. A difference between this embodiment and step S201 to step S204 described in the foregoing embodiment lies in that the detection module 4203 obtains the power supply efficiency by detecting an input/output power, including the following specific steps.

Step S301: The detection module 4203 obtains the input power of the synchronous step-down regulator module 4201 and the output power of the second power supply module 430.

For example, the detection module 4203 obtains an input power P1 from the synchronous step-down regulator module 4201 through detection 2. The detection module 4203 obtains an output power P1' from the second power supply module 430 through detection 5.

Step S302: The detection module 4203 obtains the input power of the switched capacitor converter module 4202 and the output power of the second power supply module 430.

For example, the detection module 4203 obtains an input power P2 from the switched capacitor converter module 4202 through detection 3. The detection module 4203 obtains an output power P2' from the second power supply module 430 through detection 5.

Step S303: The detection module 4203 determines the first power supply efficiency based on the input power of the synchronous step-down regulator module 4201 and the output power of the second power supply module 430, and determines the second power supply efficiency based on the input power of the switched capacitor converter module 4202 and the output power of the second power supply module 430.

Power supply efficiency is a ratio of an output power to an input power. For example, the first power supply efficiency is a ratio of the output power of the second power supply module 430 to the input power of the synchronous step-down regulator module 4201.

For example, the detection module 4203 determines, based on the input power P1 of the synchronous step-down regulator module 4201 and the output power P1' of the second power supply module 430, that the first power supply efficiency is P1'/P1, and determines, based on the input power P2 of the switched capacitor converter module 4202 and the output power P2' of the second power supply module 430, that the second power supply efficiency is P2'/P2.

Step S304: The detection module 4203 compares values of the first power supply efficiency and the second power supply efficiency, and controls, based on the values of the first power supply efficiency and the second power supply efficiency, the regulated voltage output by the power path management module 4204.

Specific implementation is described in the foregoing embodiment, and details are not described herein again.

In a possible embodiment of this application, as shown in FIG. 9, the power path management module 4204 includes a first diode and a second diode. A first terminal of the first diode is connected to the output terminal of the synchronous step-down regulator module 4201, and a second terminal of the first diode is connected to the second power supply module 430. A first terminal of the second diode is connected to the output terminal of the switched capacitor converter module 4202, and a second terminal of the second diode is connected to the second power supply module 430.

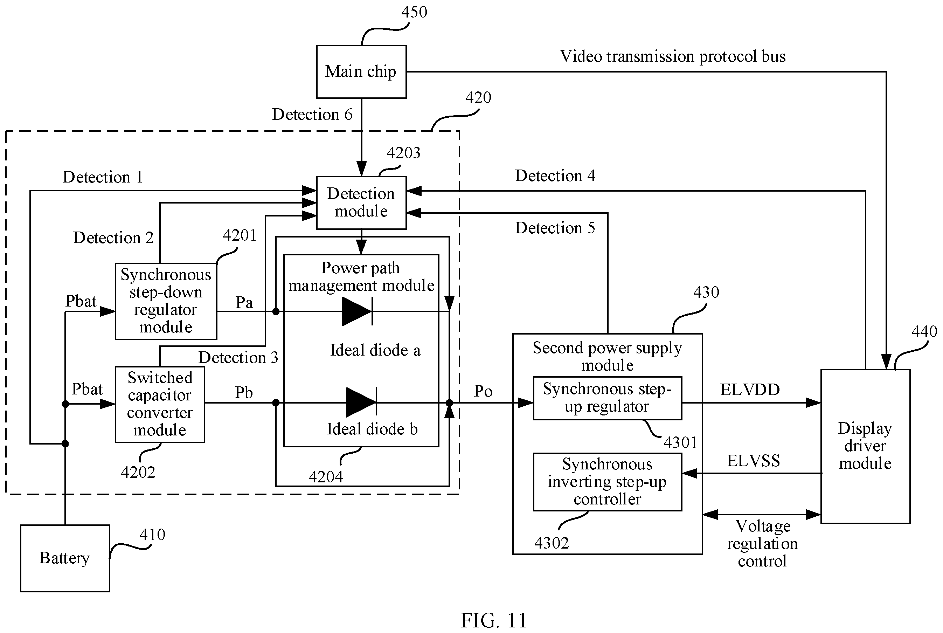

Both the first diode and the second diode are ideal diodes. For example, refer to FIG. 11. The first diode is an ideal diode a, and the second diode is an ideal diode b.

It should be noted that the power path management module 4204 may also be an electronic component that is turned on or turned off by another control circuit. This is not limited in this embodiment of this application.

In a possible implementation, when the detection module 4203 controls the power path management module 4204 to output the first regulated voltage, the first diode is turned on, and the second diode is turned off; and when the detection module 4203 controls the power path management module 4204 to output the second regulated voltage, the first diode is turned off, and the second diode is turned on.

In a possible embodiment of this application, as shown in FIG. 11, the power supply circuit further includes a main chip 450. The main chip 450 is connected to the display driver module 440, and the main chip 450 is configured to send image information to the display driver module 440.

The main chip 450 is connected to the display driver module 440 through a video transmission protocol bus, and the main chip 450 may transmit image information to be displayed to the display driver module 440, for example, a display driver IC, through the video transmission protocol bus.

It should be noted that the main chip 450 further supports task computation and management, graphics service processing, and the like, for example, an advanced reduced instruction set computer machines (advanced RISC machines, ARM) system on chip (system on chip, SOC), a microprocessor without interlocked pipeline stages (microprocessor without interlocked pipeline stages, MIPS) SOC, and a central processing unit (central processing unit, CPU) SOC (for example, an x86 SOC).

In a possible embodiment of this application, as shown in FIG. 11, the second power supply module 430 includes a synchronous step-up regulator 4301 and a synchronous inverting step-up and step-down controller 4302. An input terminal of the synchronous step-up regulator 4301 is connected to the output terminal of the power path management module 4204, an output terminal of the synchronous step-up regulator 4301 is configured to send a supply voltage to the display driver module 440, and the synchronous inverting step-up and step-down controller 4302 is configured to receive a feedback voltage sent by the display driver module 440.

For example, the synchronous step-up regulator 4301 receives the first regulated voltage Pa, and steps up the first regulated voltage Pa to output the supply voltage ELVDD. The display driver module 440 may adjust a voltage based on the image information transmitted by the main chip 450, and output a feedback voltage ELVSS to the synchronous inverting step-up and step-down controller 4302.

Optionally, voltage regulation control on the supply voltage and the feedback voltage may be further performed between the second voltage module 430 and the display driver module 440.

In a possible embodiment of this application, the main chip 450 is connected to the detection module 4203, and the detection module 4203 is configured to detect status information of the main chip 450, for example, power consumption information or turbo (turbo) information.

For example, as shown in FIG. 11, the detection module 4203 detects the main chip 450 through detection 6.

An embodiment of this application further provides a power supply device. The power supply device includes the power supply circuit in the foregoing embodiments. A specific embodiment of the power supply circuit is not described herein again.

An embodiment of this application further provides an electronic device. The electronic device includes a battery module, a display module, and the power supply circuit described in the foregoing embodiments. The battery module is configured to provide a power supply voltage for the power supply circuit, and the display module is configured to display an image.

In a possible implementation of this application, the display module includes a display driver module and an OLED display. The display driver module is configured to drive the OLED display to display an image.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the apparatus embodiments described above are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power supply circuit, wherein the power supply circuit comprises a first power supply module and a second power supply module;
an input terminal of the first power supply module is configured to receive a power supply voltage, the power supply voltage is provided by at least two strings of batteries, an output terminal of the first power supply module is connected to an input terminal of the second power supply module, an output terminal of the second power supply module is configured to provide a supply voltage for a display driver module, and the display driver module is configured to drive a screen to display an image; and
the first power supply module is configured to step down and convert the power supply voltage into a regulated voltage, the second power supply module is configured to step up and convert the regulated voltage into the supply voltage, and the supply voltage is used to drive the display driver module.

2. The power supply circuit according to claim 1, wherein the first power supply module comprises a synchronous step-down regulator module and/or a switched capacitor converter module.

3. The power supply circuit according to claim 2, wherein when the first power supply module comprises the synchronous step-down regulator module and the switched capacitor converter module, the first power supply module further comprises a detection module and a power path management module;
an input terminal of the synchronous step-down regulator module and an input terminal of the switched capacitor converter module are configured to receive the power supply voltage, an output terminal of the synchronous step-down regulator module is connected to a first input terminal of the power path management module, an output terminal of the switched capacitor converter module is connected to a second input terminal of the power path management module, and an output terminal of the power path management module is connected to the input terminal of the second power supply module; and
an output terminal of the detection module is connected to a third input terminal of the power path management module, and the detection module is configured to control the power path management module to output a first regulated voltage output by the synchronous step-down regulator module or a second regulated voltage output by the switched capacitor converter module.

4. The power supply circuit according to claim 3, wherein the detection module is configured to detect power supply efficiency sets under different loads, the power supply efficiency sets comprise a power supply efficiency set of a first path and a power supply efficiency set of a second path,
the first path is a path in which the synchronous step-down regulator module is located, and the second path is a path in which the switched capacitor converter module is located; and
the detection module is configured to detect load information and the power supply voltage, and control, based on the load information, the power supply voltage, and the power supply efficiency sets, the power path management module to output the first regulated voltage or the second regulated voltage.

5. The power supply circuit according to claim 3, wherein the detection module is configured to detect power supply efficiency of a first path and power supply efficiency of a second path, and
when the power supply efficiency of the first path is greater than the power supply efficiency of the second path, the power path management module outputs the first regulated voltage;
when the power supply efficiency of the second path is greater than the power supply efficiency of the first path, the power path management module outputs the second regulated voltage; or
when the power supply efficiency of the second path is equal to the power supply efficiency of the first path, the power path management module outputs the first regulated voltage or the second regulated voltage.

6. The power supply circuit according to any one of claims 2 to 5, wherein the power path management module comprises a first diode and a second diode;
a first terminal of the first diode is connected to the output terminal of the synchronous step-down regulator module, and a second terminal of the first diode is connected to the second power supply module; and
a first terminal of the second diode is connected to the output terminal of the switched capacitor converter module, and a second terminal of the second diode is connected to the second power supply module.

7. The power supply circuit according to any one of claims 1 to 6, wherein the power supply circuit further comprises a main chip, the main chip is connected to the display driver module, the main chip is configured to send image information to the display driver module, and the image information is used to display an image.

8. The power supply circuit according to any one of claims 1 to 7, wherein the second power supply module comprises a synchronous step-up regulator and a synchronous inverting step-up controller; and
an input terminal of the synchronous step-up regulator is connected to the output terminal of the power path management module, an output terminal of the synchronous step-up regulator is configured to send a supply voltage to the display driver module, and the synchronous inverting step-up controller is configured to receive a feedback voltage sent by the display driver module.

9. An electronic device, wherein the electronic device comprises a battery module, a display module, and the power supply circuit according to any one of claims 1 to 8,
the battery module is configured to provide a power supply voltage for the power supply circuit, and the display module is configured to display an image.

10. The electronic device according to claim 9, wherein the display module comprises a display driver module and a display, and the display driver module is configured to drive the display to display an image.
